# EUROPÄISCHE PATENTANMELDUNG

(11) **EP 3 184 595 A1**
(43) Veröffentlichungstag der Anmeldung: **28.06.2017**
(21) Anmeldenummer: 16205697.2
(22) Anmeldetag: 21.12.2016
(51) Int. Cl.: C09J 5/06, C09J 7/02

(54) **VERFAHREN ZUR VERKLEBUNG EINES DECKMATERIALS AUF EINEM FORMKÖRPER**

(30) Priorität: 22.12.2015 DE 102015226482
(71) Anmelder: tesa SE, 22848 Norderstedt (DE)
(72) Erfinder: SELLIN, Jannik, 21073 Hamburg (DE); NIEMEYER, Thomas, 23562 Lübeck (DE); VON POSSEL, Esther, 22299 Hamburg (DE)

(57) **Zusammenfassung**

Die Erfindung betrifft ein Verfahren zur Verklebung eines flächigen Deckmaterials auf einem Formkörper,
wobei ein Klebefilm umfassend zumindest eine Schicht einer wärmeaktiviert verklebbaren Klebemasse eingesetzt wird, wobei
der Klebefilm vollflächig oder teilflächig zwischen dem Deckmaterial und dem Formkörper angeordnet wird, wobei die wärmeaktiviert verklebbare Klebemasse noch nicht auf dem Formkörper verklebt,
wobei das Deckmaterial unter Zugspannung auf den Formkörper aufgezogen wird, so dass die Schicht der wärmeaktiviert verklebbaren Klebemasse den Formkörper kontaktiert, und mittels des ausschließlich aus der Zugspannung resultierenden Drucks und gegebenenfalls mittels externer Energiezufuhr eingeführter Wärme die Aktivierung der wärmeaktiviert verklebbaren Klebemasse bewirkt wird,
so dass die wärmeaktiviert verklebbare Klebemasse auf dem Formkörper verklebt und eine dauerhafte Verbindung des Deckmaterials zu dem Formkörper hergestellt wird.

## Beschreibung

Die Erfindung betrifft ein Verfahren zur Verklebung eines flächigen Deckmaterials auf einem Formkörper, wobei ein Klebefilm umfassend zumindest eine Schicht einer wärmeaktiviert verklebbaren Klebemasse eingesetzt wird, und wobei der Klebefilm zur Verklebung vollflächig oder teilflächig zwischen dem Deckmaterial und dem Formkörper angeordnet wird.

Bei der Herstellung von Gebrauchsgegenständen wird häufig ein Formkörper aus einem Metall, einem Kunststoff, Gummi, Schaumstoff, Hartschaum oder dergleichen mit einem Bezug, beispielsweise aus einem textilen Material, aus Leder, Kunstleder, Kunststofffolie oder dergleichen bezogen. Insbesondere wenn solche Gebrauchsgegenstände bei der Verwendung mechanischen Beanspruchungen ausgesetzt sind, soll ein solcher Bezug dauerhaft und sicher auf dem Formkörper fixiert sein, damit er beim Gebrauch nicht verrutscht, sich verzieht oder gar wieder abfällt.
Bisher wird für solche Fixierungen häufig ein Flüssigkleber eingesetzt. Damit sind jedoch Probleme wie unsaubere Prozesse oder eine unsaubere Verarbeitung des fertigen Produktes durch Ausquetschen von Kleber, die Migration von Lösemitteln aus dem Kleber in den Bezug oder in den Formkörper verbunden, oder die Ausdampfung von flüchtigen - und häufig gesundheitsschädlichen - Substanzen, wie Lösemittelresten, aus der Klebemasse mit der Zeit. Für sehr zuverlässige Verklebungen setzt man bei den Flüssigklebern gerne auf Reaktivklebstoffe, aber verbunden mit dem Problem, dass diese zur Aushärtung längere Reaktionszeiten benötigen können.

Um sehr dauerhafte und zuverlässige Verklebungen zu gewährleisten, haben sich wärmeaktiviert verklebbare Klebemassen, insbesondere in Filmform, bewährt. Diese sind üblicherweise bei Raumtemperatur nicht klebrig oder nur schwach klebrig, verkleben aber bei Überschreiten einer bestimmten Aktivierungstemperatur - insbesondere durch thermisches Aufschmelzen und/oder Einsetzens einer Aushärtungsreaktion - und binden beim Abkühlen endgültig ab. Wärmeaktiviert verklebbare Klebemassen erfordern aber regelmäßig einen erhöhten Aufwand bei dem Verklebungsprozess, da neben der extern einzubringenden Wärme auch der Einfluss erhöhten Drucks erforderlich ist, um eine optimale Verklebung zu gewährleisten. Die Verklebung findet daher üblicherweise in Heißpressen statt, was diese Verklebungsmethode auf planare, flächige Substrate beschränkt. Zudem sind kompressible und wärmeempfindliche Materialien einem solchen Prozess nicht zugänglich.

Aufgabe der Erfindung ist es daher, den Prozess der Verklebung mit einer wärmeaktiviert verklebbaren Klebemasse mit einfachem Verfahrensaufwand auch für solche Substrate zugänglich zu machen, die sich nach den bisher üblichen Verfahren hiermit nicht verkleben lassen oder bei denen dieser Verklebungsprozess einen erhöhten technischen Aufwand bedeutet.

Gelöst werden kann diese Aufgabe durch das erfindungsgemäß vorgeschlagene Verfahren. Dabei wird zur Verklebung eines flächigen Deckmaterials auf einem Formkörper ein Klebefilm umfassend zumindest eine Schicht einer wärmeaktiviert verklebbaren Klebemasse (in der Literatur gleichbedeutend auch als "hitzeaktiviert verklebbare Klebemasse" bezeichnet) eingesetzt. Erfindungsgemäß wird zunächst der Klebefilm voll- oder teilflächig zwischen dem Deckmaterial und dem Formkörper angeordnet, wobei die wärmeaktiviert verklebbaren Klebemasse noch nicht oder nur sehr schwach auf dem Formkörper verklebt. Das Deckmaterial wird unter Zugspannung derart auf den Formkörper aufgezogen wird, dass die dazwischen angeordnete Schicht der wärmeaktiviert verklebbaren Klebemasse den Formkörper kontaktiert, wobei mittels des aus der Zugspannung resultierenden Drucks und gegebenenfalls mittels externer Energiezufuhr eingeführter Wärme die Aktivierung der wärmeaktiviert verklebbaren Klebemasse bewirkt wird, so dass die wärmeaktiviert verklebbare Klebemasse auf dem Formkörper verklebt und eine dauerhafte Verbindung des Deckmaterials zu dem Formkörper hergestellt wird.

Auch bei den wärmeaktiviert verklebbaren Klebemasse kann auf den dem Fachmann zur Verfügung stehenden Pool zurückgegriffen werden. Diese sind insbesondere derart ausgewählt, dass sie vor der Aktivierung nicht oder nur unwesentlich eigenklebrig sind, so dass sie nach Aufziehen des Deckmaterials auf den Formkörper, aber vor der Aktivierung, noch nicht auf diesem verkleben (oder gegebenenfalls nur sehr schwach) und somit eine Repositionierung möglich ist, um etwa die Anordnung des Deckmaterials auf dem Formkörper zu korrigieren oder feinzujustieren.

Wärmeaktivierbare Klebemassen können in zwei Kategorien unterschieden werden, die sich bei erfindungsgemäß hervorragend einsetzen lassen:
a) thermoplastische wärmeaktivierbare Klebemassen ("Schmelzklebemassen")
b) reaktive wärmeaktivierbare Klebemassen ("Reaktivklebemassen")

Thermoplastische wärmeaktivierbare Klebemassen ("Schmelzklebemassen") sind bei Raumtemperatur üblicherweise nicht- oder schwach selbstklebend. Die Klebemasse wird erst mit der Hitze aktiviert, schmilzt auf, wird fließfähig und kann auf die zu verklebenden Substrate aufziehen, sie wird bei den erhöhten Temperaturen selbstklebrig. Dafür ist ein eine entsprechend hohe Glasübergangstemperatur der Klebemasse verantwortlich, so dass die Aktivierungstemperatur zur Erzielung einer hinreichenden Klebrigkeit oberhalb der Raumtemperatur liegt. Es tritt bei den erhöhten Temperaturen bereits vor dem Abbinden der Masse aufgrund der selbstklebenden Eigenschaften eine Klebewirkung ein. Nach dem Zusammenfügen binden diese Klebemassen beim Abkühlen unter Verfestigung physikalisch (in der Regel reversibel; thermoplastische Materialien), gegebenenfalls zusätzlich chemisch (in der Regel irreversibel; thermoplastisch-reaktive Materialien) ab, so dass die Klebewirkung auch im abgekühlten Zustand erhalten bleibt und dort ihre Endfestigkeit entfaltet. Je mehr Wärme, Druck und Zeit, desto fester wird in der Regel die Verbindung der beiden zu verklebenden Materialien. Hiermit können regelmäßig maximale Verbundfestigkeiten und leichte Verarbeitungsbedingungen verwirklicht werden. Als Thermoplaste werden solche Verbindungen verstanden, wie sie im Römpp (Online Version; Ausgabe 2008, Dokumentkennung RD-20-01271) definiert sind.

Reaktive wärmeaktivierbare Klebemassen ("Reaktivklebemassen") sind Polymersysteme, die funktionelle Gruppen derart aufweisen, dass bei Wärmezufuhr eine chemische Reaktion stattfindet, die Klebemasse chemisch abbindet und somit den Klebeeffekt hervorruft. Reaktive wärmeaktivierbare Klebemassen werden in der Regel bei Wärmezufuhr nicht selbstklebrig, so dass die Klebewirkung erst nach dem Abbinden eintritt. Reaktive wärmeaktivierbare Klebemassen sind in der Regel nicht thermoplastisch. Für die Funktionalität von Reaktivsystemen ist die Glasübergangstemperatur nicht bedeutend. Gleichfalls kann es vorteilhaft sein, die Reaktivmassen derart auszugestalten, dass sie bei erhöhter Temperatur weicher und/oder fließfähiger werden, um sich der Klebefuge optimal anzupassen.

Bei besonders vorteilhafter erfindungsgemäßer Verfahrensführung werden als wärmeaktiviert verklebbare Klebemassen solche eingesetzt, deren Aktivierungstemperatur niedrig liegt. Hierdurch ist es möglich, auch wärmeempfindliche Materialien zu verkleben, ohne dass diese geschädigt werden. Da zudem kein äußerer Druck ausgeübt werden muss, ist durch das so gestaltete Verfahren eine besonders materialschonende Verklebung möglich.

Als wärmeaktiviert verklebbare - und für die in der hier vorliegenden Schrift dargestellte Erfindung im Sinne der Schicht der wärmeaktiviert verklebbaren Klebemasse hervorragend geeignete - Klebemasse mit relativ niedriger Aktivierungstemperatur lassen sich vorteilhaft solche latenten Klebemassen einsetzen, wie sie zum Beispiel in der WO 2013/127697 A beschrieben sind. Dabei handelt es sich im Sinne der wärmeaktiviert verklebbaren Klebmassenschichten insbesondere um solche latentreaktiven Klebefilme, die enthalten:
a) eine thermoplastische Komponente mit einer Schmelztemperatur T_{Schmelz} im Bereich von 35 °C ≤ T_{Schmelz} ≤ 90 °C, insbesondere 40 °C ≤ T_{Schmelz} ≤ 60 °C, wobei die thermoplastische Komponente funktionelle Gruppen, die mit Isocyanat reagieren können, aufweist, und
b) eine isocyanat-haltige Komponente, die partikulär in die thermoplastische Komponente eindispergiert vorliegt und im Bereich der Partikeloberfläche im Wesentlichen deaktiviert ist, wobei die Partikel eine Anspringtemperatur T_{Anspring} von 40 °C ≤ T_{Anspring} ≤ 100 °C, insbesondere 45 °C ≤ T_{Anpring} ≤ 75 °C, aufweisen und wobei T_{Anspring} ≥ T_{Schmelz} ist.
Im Sinne dieser Beschreibung ist T_{Schmelz} die Schmelztemperatur der thermoplastischen Komponente und T_{Anspring} die Temperatur, bei der die Isocyanat-Gruppen der in die thermoplastische Komponente eindispergierten Partikel in die Lage versetzt werden, mit den funktionellen Gruppen des thermoplastischen Polyurethans zu reagieren (z. B. weil sie sich in der Matrix mit dem thermoplastischen Polyurethan verteilen). Im Falle blockierter Isocyanatgruppen ist T_{Anspring} mit der Deblockierungstemperatur verknüpft, im Falle einer Mikroverkapselung mit dem Release von Isocyanat aus den Mikrokapseln (z. B. durch Schmelzen der Mikrokapselhülle) und im Falle der im Bereich der Oberfläche der Isocyanatpartikel desaktivierter Isocyanate mit einem Aufschmelzen der Isocyanatpartikel. Im Sinne dieser Erfindung sind alle nach dem Stand der Technik bekannten blockierten, mikroverkapselten bzw. im Bereich der Partikeloberfläche desaktivierten Isocyanathaltigen Systeme denkbar, die die Angaben zu T_{Anspring} erfüllen. Die thermoplastischen Polyurethane und die Isocyanat-haltige Komponente sind bevorzugt in wässrigem Medium dispergierbar bzw. in wässrigem Medium dispergiert.

Die Bestimmung von Schmelztemperaturen (T_{Schmelz}) erfolgt mittels differentieller Scanning Kalorimetrie (DDK, DSC) nach DIN 53765-B-10 (1994).
Die Bestimmung von T_{Anspring} erfolgt ebenfalls mittels differentieller Scanning Kalorimetrie (DDK, DSC). Dabei wird das exotherme Signal im Thermogramm der ersten Aufheizkurve bei einer Heizrate von 10 K/min ausgewertet, das der Reaktion der Isocyanatgruppen entspricht, ausgewertet. Als T_{Anspring} wird die Onset-Temperatur dieses Signals verwendet.

Wird der wärmeaktiviert verklebbare Klebemasse auf dem Deckmaterial durch Lamination vorfixiert, so sollte eine eventuell eingebrachte Wärme zur Vorfixierung jeweils soweit unter der Anspringtemperatur T_{Anspring} der latentreaktiven Klebemassenschicht liegen, so dass die schlussendliche - durch die Reaktion des Isocyanats mit den funktionellen Gruppen der thermoplastischen Komponente bewirkte - Verklebung hierbei noch nicht anspringt (initiiert wird).

Die latentreaktiven Klebefilme enthalten insbesondere eine thermoplastische Komponente, die eine Schmelztemperatur, T_{Schmelz}, aufweist und funktionelle Gruppen enthält, die mit Isocyanat reagieren können, sowie eine Isocyanat-haltige Komponente, die partikulär, insbesondere feinteilig partikulär, in die thermoplastische Komponente eindispergiert vorliegt und blockiert, mikroverkapselt oder im Bereich der Partikeloberfläche im Wesentlichen desaktiviert ist. Feinteilig partikulär bedeutet dabei mit einer Partikelgrößenverteilung mit d₅₀ < 50 µm, wobei die Partikelgrößenverteilung vorzugsweise < 15 µm ist. Latentreaktive Klebefilme basieren vorzugsweise auf sogenannten 1 K latentreaktivem Polyurethan, erhalten aus wässriger Polyurethan-Dispersion, bevorzugt Dispercoll U^{®} der Fa. Bayer AG; dabei ist die Isocyanat-haltige Komponente eine solche, die im Bereich der Partikeloberfläche im Wesentlichen desaktiviert ist.

Die Partikel weisen eine Anspringtemperatur, T_{Anspring}, auf, für die gilt T_{Schmelz} ≤ T_{Anspring}. T_{Schmelz} liegt zwischen 35 °C und 90 °C, bevorzugt zwischen 40 °C und 60 °C. T_{Anspring} liegt zwischen 40 °C und 120 °C, bevorzugt bei höchstens 100 °C, ganz besonders bevorzugt bei höchstens 90 °C. Als Untergrenze ist 50 °C bevorzugt und 60 °C besonders bevorzugt.

Die latentreaktiven Klebefilme sind bei Raumtemperatur nicht haftklebrig, so dass eine gute (Re-)Positionierbarkeit gewährleistet wird, bevor thermisch initiiert und der Aufbau der Klebfestigkeit der Verklebung gestartet wird.

Besonders bevorzugt ist T_{Schmelz} < T_{Anspring}, da so ein ungewolltes Auslösen der Vernetzungsreaktion bei der Herstellung des bahnförmigen latentreaktiven Klebefilms sicher vermieden werden kann.

Als thermoplastische Komponente kommen vorzugsweise solche Verbindungen zum Einsatz, die mit OH- und/oder NH₂-Gruppen funktionalisiert sind. Sehr bevorzugt handelt es sich bei der thermoplastischen Komponente um zumindest ein semikristallines Polyesterpolyurethan.

Der latentreaktive Klebefilm enthält dabei bevorzugt eine anionische, hochmolekulare Polyurethan-Dispersion als thermoplastische Komponente, die eine Schmelztemperatur (in getrockneter Form) T_{Schmelz} mit 35°C ≤ T_{Schmelz} ≤ 90°C, insbesondere 40°C ≤ T_{Schmelz} ≤ 60°C, aufweist und funktionelle Gruppen enthält, die mit Isocyanat reagieren können, beispielweise in Form kommerziell erhältlicher Produkte aus der oben erwähnten Dispercoll U-Familie; wie Dispercoll U53, Dispercoll U54, Dispercoll U56, Dispercoll U 8755, Dispercoll U XP 2815, Dispercoll VP KA 8758, Dispercoll U XP 2682, Dispercoll U 2824 XP, Dispercoll U XP 2701, Dispercoll U XP 2702, Dispercoll U XP 2710 und/oder Dispercoll BL XP 2578 (Dispercoll ist eine eingetragene Marke der Bayer AG).

Der latentreaktive Klebefilm enthält dabei zudem bevorzugt Toluylen-diisocyanat-Verbindungen (TDI-Verbindungen), wie Dispercoll BL XP 2514 (TDI-Dimer) und/oder Aqualink U (Dispersion von blockiertem TDI-Dimer) und/oder Isophoron-Diisocyanate (IPDI), wie Aqualink D (Dispersion von blockiertem IPDI-Trimer) als Isocyanat-haltige Komponente, die partikulär, insbesondere feinteilig partikulär, in die thermoplastische Komponente eindispergiert vorliegt und blockiert, mikroverkapselt oder im Bereich der Partikeloberfläche im Wesentlichen desaktiviert ist. Eingesetzt werden die Diisocyanate beispielsweise in Form der wässrigen Suspensionen des jeweiligen latent-reaktiven Feststoff-Isocyanats. Aqualink wird von der Fa. Aquaspersions angeboten. Insbesondere in Kombination mit anionischen, hochmolekularen Polyurethan-Dispersionen als thermoplastischer Komponente (wie die genannten Dispercoll U-Produkte) können die vorgenannten Diisocyanat-Produkte als Vernetzer-Komponente verwendet werden.

Andere Isocyanate, auch monomere und oligomere Verbindungen sowie Polyisocyanate, sind einsetzbar.

Der latentreaktive Klebefilm kann darüber hinaus weitere Formulierungsbestandteile enthalten. Dazu zählen Verdicker, Netzmittel, Entschäumer, Füllstoffe (z. B. thermisch leitende), Pigmente (beinhaltend Mittel zur Färbung, Weißgradeinstellung und/oder Schwärzung), Katalysatoren, Stabilisatoren, Alterungsschutzmittel, Lichtschutzmittel und weitere Polymere zur Einstellung spezieller Klebeeigenschaften. Spezielle Klebeeigenschaften lassen sich beispielsweise durch Zumischen wässriger Dispersionen amorpher Polymere (z. B. Polyetherurethane oder Polyacrylate) und/oder durch Zumischen wässriger Harzdispersionen (insbesondere basierend auf Kolophoniumestern) oder flüssiger Harze einstellen.

Erfindungsgemäß bevorzugt kommt ein latentreaktiver Klebefilm mit zumindest einer Schicht einer latentreaktiven Klebeformulierung zum Einsatz mit einer Schichtdicke zwischen zumindest 10 µm und höchstens 500 µm, bevorzugt zwischen zumindest 20 µm und höchstens 250 µm.

Als Deckmaterial sind vorteilhaft solche Deckmaterialien geeignet, die sich auf Formkörper aufziehen lassen, insbesondere solche Materialien, die gedehnt werden können. beispielweise Textilien, Leder, Kunstleder, Kunststofffolien und dergleichen. Je nach Ausgestaltung des Formkörpers lassen sich aber auch wenig dehnbare Materialien um Formkörper spannen, wie beispielsweise Metallfolien oder dergleichen.

Erfindungsgemäß vorteilhaft geht man vor, indem die Schicht der wärmeaktiviert verklebbaren Klebemasse vor der Kontaktierung mit dem Formkörper auf dem Deckmaterial fixiert wird. Dies kann beispielweise durch Vorlaminierung der wärmeaktiviert verklebbaren Klebemasse auf dem Deckmaterial und/oder durch Einbringung einer Schicht einer Selbstklebemasse zwischen der Schicht der wärmeaktiviert verklebbaren Klebemasse und dem Deckmaterial geschehen. So entsteht so ein Vorverbund aus dem Deckmaterial, gegebenenfalls der Selbstklebemasse und der Schicht der wärmeaktiviert verklebbaren Klebemasse, der dann im erfindungsgemäßen Verfahren auf den Formkörper aufgezogen werden kann.

Ein solcher Vorverbund kann auch derart hergestellt werden, dass erfindungsgemäß ein vorgefertigter Klebeverbund umfassend zumindest eine Schicht einer Selbstklebemasse, die der Vorfixierung dient, sowie eine Schicht einer wärmeaktiviert verklebbaren Klebemasse, die der Endverklebung dient, eingesetzt wird. Die beiden Klebemassenschichten - Selbstklebemassenschicht und Schicht der wärmeaktiviert verklebbaren Klebemasse - sind - abgesehen von eventuell vorhandenen temporär vorgesehenen Trennmaterialien - außenliegende Schichten eines solchen Klebemassenverbundes.

Der erfindungsgemäß eingesetzte vorgefertigte Klebeverbund oder der im Prozess entstandene Verbund von Selbstklebemasse und wärmeaktiviert verklebbarer Klebeschicht kann weitere Schichten aufweisen, die insbesondere zwischen der Selbstklebemassenschicht und der Schicht der wärmeaktiviert verklebbaren Klebemasse vorgesehen sind, wie etwa Trägerschichten, Stabilisierungsschichten, Trennschichten oder dergleichen. Insbesondere kann beispielweise eine Barriereschicht vorgesehen sein, die die Wanderung von Substanzen zwischen den beiden Schichten verhindert.
Für die Handhabbarkeit dieser Klebeverbunde ist es vorteilhaft, wenn diese vor der Anwendung auf einer ihrer beiden Klebeschichten - insbesondere der Schicht der Selbstklebemasse - mit einem Trennmaterial versehen sind, es können auch beide Klebemassenschichten mit einem Trennmaterial versehen sein.
Die Selbstklebemassenschicht und die wärmeaktiviert verklebbare Klebemassenschicht können jeweils - und unabhängig voneinander - vollflächig oder teilflächig vorliegen. Teilflächige Schichten können zusammenhängend oder nicht zusammenhängend ausgestaltet sein, letzteres zum Beispiel in Form mehrerer unabhängig voneinander vorgesehenen Klebemassensegmente, wie etwa Kalotten, Streifen, Punkte oder dergleichen. Als eine Klebemassenschicht im Sinne dieser Schrift wird demzufolge eine Klebemasse angesehen, deren Einzelteile im Wesentlichen in einer Ebene liegen.
In einer sehr vorteilhaften Ausführung der Erfindung besteht der erfindungsgemäß eingesetzte Klebeverbund - abgesehen von eventuell temporär vorliegenden Trennmaterialien - ausschließlich aus einen Schicht einer Selbstklebemasse und einer Schicht einer wärmeaktiviert verklebbaren Klebemasse.

Als Selbstklebemasse lassen sich grundsätzlich die dem Fachmann bereits bekannten Selbstklebemassen einsetzen. Selbstklebemassen, synonym als Haftklebemassen bezeichnet, englisch: "pressure sensitive adhesives" (PSA), sind insbesondere solche polymeren Massen, die - gegebenenfalls durch geeignete Additivierung mit weiteren Komponenten, wie beispielsweise Klebharzen - bei der Anwendungstemperatur (sofern nicht anders definiert, bei Raumtemperatur) dauerhaft klebrig und permanent klebfähig sind und an einer Vielzahl von Oberflächen bei Kontakt anhaften, insbesondere sofort anhaften (einen sogenannten "Tack" [Klebrigkeit oder Anfassklebrigkeit] aufweisen). Sie sind in der Lage, bereits bei der Anwendungstemperatur ohne eine Aktivierung durch Lösemittel oder durch Wärme - üblicherweise aber durch den Einfluss eines mehr oder weniger hohen Druckes - ein zu verklebenden Substrat hinreichend zu benetzen, damit sich zwischen der Masse und dem Substrat für die Haftung hinreichende Wechselwirkungen ausbilden können. Hierfür wesentliche Einflussparameter sind unter anderem der Druck sowie die Kontaktzeit. Die besonderen Eigenschaften der Haftklebemassen gehen unter anderem insbesondere auf deren viskoelastische Eigenschaften zurück.
Selbstklebemassen können grundsätzlich auf Grundlage von Polymeren unterschiedlicher chemischer Natur hergestellt werden. Geeignete Basispolymere für erfindungsgemäß einsetzbare Selbstklebemassen sind beispielsweise Acrylate, Methacrylate, Acrylat-Methacylat-Copolymere, Naturkautschuke, Synthesekautschuke, Acrylatblockcopolymere, Styrolblockcopolymere, EVA, bestimmte Polyolefine, Polyurethane, Polyvinylether und Silikone.
Die haftklebenden Eigenschaften werden unter anderem durch die Art und die Mengenverhältnisse der eingesetzten Monomere bei der Polymerisation der der Haftklebemasse zugrunde liegenden Polymere, deren mittlere Molmasse und Molmassenverteilung sowie durch Art und Menge der Zusatzstoffe der Haftklebemasse, wie Klebharze, Weichmacher und dergleichen, beeinflusst.
Zur Erzielung der viskoelastischen Eigenschaften werden die Monomere, auf denen die der Haftklebemasse zugrunde liegenden Polymere basieren, sowie die gegebenenfalls vorhandenen weiteren Komponenten der Haftklebemasse insbesondere derart gewählt, dass die Haftklebemasse eine Glasübergangstemperatur (nach DIN 53765) unterhalb der Anwendungstemperatur (also üblicherweise unterhalb der Raumtemperatur) aufweisen. Durch geeignete kohäsionssteigernde Maßnahmen, wie beispielsweise Vernetzungreaktionen (Ausbildung brückenbildender Verknüpfungen zwischen den Makromolekülen), kann der Temperaturbereich, in dem eine Polymermasse haftklebrige Eigenschaften aufweist, vergrößert und/oder verschoben werden. Der Anwendungsbereich der Haftklebemassen kann somit durch eine Einstellung zwischen Fließfähigkeit und Kohäsion der Masse optimiert werden.

Vorteilhaft werden stark haftende Selbstklebemassen eingesetzt, um eine feste Verklebung auf dem Deckmaterial zu gewährleisten. Je nach Gegebenheit kann es aber auch vor Vorteil sein, schwächer haftende Selbstklebemassen einzusetzen, insbesondere dann, wenn eine Repositionierung des Deckmaterials mit der wärmeaktiviert verklebbaren Klebemassenschicht durch Lösen der Selbstklebemasse im Verlaufe des erfindungsgemäßen Verfahrens beabsichtigt ist.

Das erfindungsgemäße Verfahren lässt sich vorteilhaft überall dort einsetzten, wo Formkörper mit einem Deckmaterial, wie etwa einem Bezug, versehen werden sollen, insbesondere dort, wo es die Formkörper aufgrund ihrer dreidimensionalen Ausformung erlauben, das Deckmaterial unter Spannung auf den Formkörper aufzuziehen. Besonders vorteilhaft lässt sich das erfindungsgemäße Verfahren beispielweise bei der Herstellung von Möbeln oder im Fahrzeug- und Automobilbereich einsetzten.
Im Automobilbereich lassen sich eine Reihe von Anwendungen denken, die erfindungsgemäß realisiert werden können; so werden im Innenraum von Fahrzeugen eine Vielzahl von Bauteilen mit Leder oder mit Kunstleder bezogen, wie etwa Verkleidungen (von Türen, Armaturen und dergleichen), Schaltknüppel bzw. -knäufe, die Mittelkonsole, Lenkräder, Kopfstützen, um beispielhaft nur einige mögliche Anwendungen zu nennen.

In einer sehr vorteilhaften Ausgestaltung des erfindungsgemäßen Verfahrens dient dieses dazu, ein Fahrzeuglenkrad herzustellen, indem ein Kern-Formkörper - etwa aus Polyurethan -, der im wesentlichen die Form des Lenkrades bereits aufweist, mit einem Bezug aus einem Deckmaterial - etwa Leder oder Kunstleder - versehen wird. Das Deckmaterial wird dabei vor der Fixierung auf dem Formkörper passgenau zugeschnitten und gegebenenfalls an ausgewählten Stellen mit Ösen, Vorbohrungen für eine spätere Vernähung oder dergleichen versehen. Dann wird die wärmeaktiverbare Klebeschicht auf der Rückseite des Bezug-Zuschnittes fixiert, insbesondere durch eine Selbstklebemasse und/oder durch Vorlaminierung.
Zur Verklebung des Deckmaterials auf dem Formkörper wird der Bezug unter Zugspannung passgenau auf diesen gespannt. Gegebenenfalls kann es vorteilhaft sein, den Bezug bereits vorzuformen, bevor er auf den Formkörper aufgebracht wird, etwa zu einem Ring zu nähen und diesen Ring dann auf den Formkörper aufzuziehen. Die fehlende oder schwache Selbstklebrigkeit der wärmeaktiviert verklebbaren Klebemassenschicht erlaubt, die Positionierung der Verklebungspartner zueinander bei Bedarf zu korrigieren. Durch die Spannung des Bezuges und dessen eventueller Dehnung dabei wird ein Druck auf die Verklebungsfläche und somit auf die wärmeaktivierbare Klebmassenschicht ausgeübt. Hierfür kann der Bezug durch entsprechende mechanische Arretierungshilfen - temporär angebrachte Klammern, Schraubzwingen, Schrauben oder dergleichen - in seiner gespannten bzw. gedehnten Position auch über längere Zeit gehalten werden, und/oder die Enden des Bezuges werden permanent miteinander vernäht, durch lokal an der Nahtstelle des Bezuges zusätzlich aufgebrachten, schnell verklebenden Kleber - wie etwa Sekundenkleber - verklebt, durch Krampen befestigt - insbesondere auf dem Formkörper befestigt -, verschraubt, vernietet oder dergleichen, wobei die Fixierungsmethoden auch miteinander kombiniert werden können.
Zudem wird soviel thermische Energie zugeführt, dass die Aktivierungstemperatur der wärmeaktiviert verklebbaren Klebemasse überschritten wird und die wärmeaktivierte Verklebung initiiert wird. Durch die anliegende Temperatur und den durch die Zugspannung ausgeübten Druck kommt es zur dauerhaften und zuverlässigen Verklebung des Bezuges auf dem Formkörper.

Durch die Verwendung des erfindungsgemäß eingesetzten Klebeverbundes wird eine zunächst repositionierbare, aber letztlich dauerhafte und sehr zuverlässige Verklebung geschaffen, die in einem einfachen Verfahren realisiert werden kann - ohne dass ein externer Druck angelegt werden müsste - die aber eine sehr saubere Verklebung garantiert. So kann durch Vermeidung der Verwendung von Flüssigklebern - bzw. deren sehr sparsamer Einsatz zur zusätzlichen Fixierung an der Nahtstelle des Bezuges, siehe oben - vermeiden werden, dass Kleber aus der Nahtstelle ausquetscht und das Produkt dauerhaft verunreinigt, oder dass Kleber durch das Deckmaterial hindurchtritt und zu Verunreinigungen führt, wie dies bei Verwendung von Flüssigklebern zum Beispiel bei textilen oder porösen Materialien häufig der Fall ist.

## Patentansprüche

1. Verfahren zur Verklebung eines flächigen Deckmaterials auf einem Formkörper, wobei ein Klebefilm umfassend zumindest eine Schicht einer wärmeaktiviert verklebbaren Klebemasse eingesetzt wird, wobei
der Klebefilm vollflächig oder teilflächig zwischen dem Deckmaterial und dem Formkörper angeordnet wird, wobei die wärmeaktiviert verklebbare Klebemasse noch nicht auf dem Formkörper verklebt,
**dadurch gekennzeichnet, dass**
das Deckmaterial unter Zugspannung auf den Formkörper aufgezogen wird, so dass die Schicht der wärmeaktiviert verklebbaren Klebemasse den Formkörper kontaktiert, und mittels des ausschließlich aus der Zugspannung resultierenden Drucks und gegebenenfalls mittels externer Energiezufuhr eingeführter Wärme die Aktivierung der wärmeaktiviert verklebbaren Klebemasse bewirkt wird,
so dass die wärmeaktiviert verklebbare Klebemasse auf dem Formkörper verklebt und eine dauerhafte Verbindung des Deckmaterials zu dem Formkörper hergestellt wird.

2. Verfahren nach Anspruch 1, **dadurch gekennzeichnet, dass**
die Schicht der wärmeaktiviert verklebbaren Klebemasse vor der Kontaktierung mit dem Formkörper auf dem Deckmaterial fixiert wird.

3. Verfahren nach einem der vorangehenden Ansprüche, **dadurch gekennzeichnet, dass** zwischen der Schicht der wärmeaktiviert verklebbaren Klebemasse und dem Deckmaterial eine Schicht einer Selbstklebemasse angeordnet ist.

4. Verfahren nach einem der vorangehenden Ansprüche, **dadurch gekennzeichnet, dass** das Deckmaterial ein Textil, Leder, Kunstleder oder eine Kunststofffolie ist.

5. Verfahren nach einem der vorangehenden Ansprüche, dass
das Deckmaterial zusätzlich mechanisch befestigt wird.

6. Verfahren nach einem der vorangehenden Ansprüche, **dadurch gekennzeichnet, dass** der Formkörper der Kern und das Deckmaterial der Bezug eines Fahrzeuglenkrades ist.
